# EUROPEAN PATENT APPLICATION

(11) **EP 4 694 357 A1**
(43) Date of publication of application: **11.02.2026**
(21) Application number: 23946122.1
(22) Date of filing: 24.07.2023
(51) Int. Cl.: H04W 48/08, H04B 7/185

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Taor, Simon Edward William
(86) International application number: PCT/CN2023/108820
(87) International publication number: WO 2025/020028

(57) **Abstract**

Provided are a wireless communication method, a terminal device, and a network device. The method includes: a first terminal device receives first information sent by a network device, wherein the first information includes one or more of the following: first cell barring information used for indicating whether a first cell allows a first-type terminal device to access; second cell barring information used for indicating whether the first cell allows a second-type terminal device to access; satellite identification information of the first cell; and first instruction information used for instructing the first terminal device to switch from a user plane optimization mode to a control plane optimization mode; wherein the first-type terminal device and the second-type terminal device are both terminal devices having NTN capabilities, and the NTN capabilities of the first-type terminal device and the second-type terminal device are not completely the same, facilitating the improvement of the possibility of successful communication of terminal devices.

## Description

### TECHNICAL FIELD

The present disclosure relates to the technical field of communications, and more particularly to a method for wireless communication, a terminal device and a network device.

### BACKGROUND

With the development of technology, in communication scenarios based on non-terrestrial network (NTN), various satellite operating modes have been introduced, such as a transparent payload operating mode and a store-and-forward mode described above. However, due to the limited information related to the NTN communication scenario that is acquired by the accessed terminal device, the accessed terminal device may experience an unsmooth NTN communication process, and may even be unable to communicate in the accessed NTN communication scenario.

### SUMMARY

The present disclosure provides a method for wireless communication, a terminal device and a network device. Various aspects involved in the present disclosure are described below.

In a first aspect, a method for wireless communication is provided, and the method includes the following operations. A first terminal device receives first information from a network device. The first information includes one or more of the following: first cell barred information, second cell barred information, satellite identification information of a first cell, and first indication information, where the first cell barred information is used for indicating whether a first cell allows access by a first type of terminal device; the second cell barred information is used for indicating whether a first cell allows access by a second type of terminal device; and the first indication information is used for indicating the first terminal device to switch from a user plane optimization mode to a control plane optimization mode. Each of the first type of terminal device and the second type of terminal device has NTN capability, and the NTN capability of the first type of terminal device is not completely identical to the NTN capability of the second type of terminal device.

In a second aspect, a method for wireless communication is provided, and the method includes the following operations. A network device transmits first information. The first information includes one or more of the following: first cell barred information, second cell barred information, satellite identification information of a first cell, and first indication information, where the first cell barred information is used for indicating whether a first cell allows access by a first type of terminal device; the second cell barred information is used for indicating whether a first cell allows access by a second type of terminal device; and the first indication information is used for indicating a first terminal device to switch from a user plane optimization mode to a control plane optimization mode. Each of the first type of terminal device and the second type of terminal device has NTN capability, and the NTN capability of the first type of terminal device is not completely identical to the NTN capability of the second type of terminal device.

In a third aspect, a terminal device is provided. The terminal device is a first terminal device and includes a receiving unit. The receiving unit is configured to receive first information from a network device. The first information includes one or more of the following: first cell barred information, second cell barred information, satellite identification information of a first cell, and first indication information, where the first cell barred information is used for indicating whether a first cell allows access by a first type of terminal device; the second cell barred information is used for indicating whether a first cell allows access by a second type of terminal device; and the first indication information is used for indicating the first terminal device to switch from a user plane optimization mode to a control plane optimization mode. Each of the first type of terminal device and the second type of terminal device has NTN capability, and the NTN capability of the first type of terminal device is not completely identical to the NTN capability of the second type of terminal device.

In a fourth aspect, a network device is provided. The network device includes a transmission unit. The transmission unit is configured to transmit first information. The first information includes one or more of the following: first cell barred information, second cell barred information, satellite identification information of a first cell, and first indication information, where the first cell barred information is used for indicating whether a first cell allows access by a first type of terminal device; the second cell barred information is used for indicating whether a first cell allows access by a second type of terminal device; and the first indication information is used for indicating a first terminal device to switch from a user plane optimization mode to a control plane optimization mode. Each of the first type of terminal device and the second type of terminal device has NTN capability, and the NTN capability of the first type of terminal device is not completely identical to the NTN capability of the second type of terminal device.

In a fifth aspect, a terminal device is provided. The terminal device includes a processor, a memory and a communication interface. The memory is configured to store one or more computer programs, and the processor is configured to call and run the one or more computer programs in the memory to cause the terminal device to perform some or all of operations in the method of the first aspect.

In a sixth aspect, a network device is provided. The network device includes a processor, a memory and a transceiver. The memory is configured to store one or more computer programs, and the processor is configured to call and run the one or more computer programs in the memory to cause the network device to perform some or all of operations in the method of the second aspect.

In a seventh aspect, a communication system is provided in an embodiment of the present disclosure. The system includes the terminal device and/or the network device described above. In another possible design, the system may also include other devices that interact with the terminal device or the network device in the solutions according to embodiments of the present disclosure.

In an eighth aspect, a computer-readable storage medium is provided in an embodiment of the present disclosure. The computer-readable storage medium has stored thereon a computer program that causes a communication device (e.g., the terminal device or the network device) to perform some or all of operations in any of the methods of the aforementioned various aspects.

In a ninth aspect, a computer program product is provided in an embodiment of the present disclosure. The computer program product includes a non-transitory computer-readable storage medium storing a computer program. The computer program is operable to cause a communication device (e.g., the terminal device or the network device) to perform some or all of operations in any of the methods of the aforementioned various aspects. In some implementations, the computer program product may be a software installation package.

In a tenth aspect, a chip is provided in an embodiment of the present disclosure. The chip includes a memory and a processor. The processor may call and run a computer program from the memory to implement some or all of operations described in any of the methods of the aforementioned various aspects.

In the embodiments of the present disclosure, the network device may transmit the first information associated with the NTN communication to the first terminal device. Accordingly, the first terminal device may perform the subsequent communication process based on the first information; compared with the conventional solution where the terminal device communicates in accordance with a preconfigured communication mode, it can be beneficial to improving the possibility of successful communication of the terminal device.

### BRIEF DESCRIPTION OF THE DRAWINGS

FIG. 1 is a schematic diagram of a communication system architecture to which an embodiment of the present disclosure is applied.
FIG. 2 is a schematic diagram of a satellite network architecture applicable to an embodiment of the present disclosure.
FIG. 3 is a schematic diagram of another satellite network architecture applicable to an embodiment of the present disclosure.
FIG. 4 is a schematic diagram of yet another satellite network architecture applicable to an embodiment of the present disclosure.
FIG. 5 is a schematic diagram of a communication process in which a satellite operates in a normal mode.
FIG. 6 is a schematic diagram of a communication process in which a satellite operates in a store-and-forward mode.
FIG. 7 is a schematic flowchart of a method for wireless communication according to an embodiment of the present disclosure.
FIG. 8 is a schematic flowchart of a method for wireless communication according to an embodiment 1 of the present disclosure.
FIG. 9 is a schematic flowchart of a method for wireless communication according to an embodiment 2 of the present disclosure.
FIG. 10 is a schematic flowchart of a method for wireless communication according to an embodiment 3 of the present disclosure.
FIG. 11 is a schematic diagram of a terminal device according to an embodiment of the present disclosure.
FIG. 12 is a schematic diagram of a network device according to an embodiment of the present disclosure.
FIG. 13 is a schematic structural diagram of a communication device according to an embodiment of the present disclosure.

### DETAILED DESCRIPTION

The technical solutions of the embodiments of the present disclosure will be described below with reference to the accompanying drawings in the embodiments of the present disclosure. It is apparent that the described embodiments herein are only part of the embodiments of the present disclosure, but not all of the embodiments. All other embodiments acquired by those of ordinary skill in the art with respect to the embodiments of the present disclosure without creative efforts shall fall within the scope of protection of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system for NR system, a LTE-based access to unlicensed spectrum (LTE-U) system, a NR-based access to unlicensed spectrum (NR-U) system, a NTN system, a universal mobile telecommunication system (UMTS), a wireless local area network (WLAN) system, a wireless fidelity (WiFi) system, a 5th-generation (5G) system or other communication systems, for example, a future communication system, such as a 6th-generation mobile communication system, for another example, a satellite communication system, etc.

Generally, conventional communication systems support the limited number of connections and are easy to be realized. However, with the development of communication technology, the mobile communication systems will support not only conventional communication, but also, for example, device to device (D2D) communication, machine to machine (M2M) communication, machine type communication (MTC), vehicle to vehicle (V2V) communication, or vehicle to everything (V2X) communication, etc. The embodiments of the present disclosure may also be applied to the communication systems.

The communication system in the embodiments of the present disclosure may be applied to a carrier aggregation (CA) scenario, a dual connectivity (DC) scenario, and a standalone (SA) network deployment scenario.

The communication system in the embodiments of the present disclosure may be applied to an unlicensed spectrum, and the unlicensed spectrum may also be considered to be a shared spectrum. Alternatively, the communication system in the embodiments of the present disclosure may also be applied to a licensed spectrum, and the licensed spectrum may also be considered as a dedicated spectrum.

The embodiments of the present disclosure may be applied to a NTN system as well as a terrestrial network (TN) system. By way of example and not limitation, the NTN system may include an NR-based NTN system and an loT-based NTN system.

The embodiments of the present disclosure are described in combination with a network device and a terminal device. The terminal device may also be referred to as a user equipment (UE), an access terminal, a subscriber unit, a subscriber station, a mobile platform, a mobile station (MS), a mobile terminal (MT), a remote station, a remote terminal, a mobile device, a user terminal, a terminal, a wireless communication device, a user agent or a user device, etc.

In the embodiments of the present disclosure, the terminal device may be a station (ST) in the WLAN, or may be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, a vehicle-mounted device, a wearable device, a terminal device in a next generation communication system such as an NR network, or a terminal device in a future evolved public land mobile network (PLMN) network, or the like.

In the embodiments of the present disclosure, the terminal device may be a device that provides voice and/or data connectivity to a user, and may be used to connect people, objects and machines, such as a handheld device, a vehicle-mounted device, etc. with wireless connection functions. The terminal device in the embodiments of the present disclosure may be a mobile phone, a Pad, a laptop computer, a tablet computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, and the like. Optionally, the UE may be used as a base station. For example, the UE may be used as a scheduling entity that provides sidelink signal(s) between UEs in V2X or D2D, etc. For example, the cellular phones and vehicles communicate with each other using the sidelink signal(s). The cellular phones communicate with smart home devices without requiring the relay of communication signal(s) through a base station.

In the embodiments of the present disclosure, the terminal device may be deployed on land, including indoor or outdoor, handheld, wearable or vehicle-mounted. The terminal device may also be deployed on the water (such as ships, etc.). The terminal device may also be deployed in the air (such as on aircraft, balloons and satellites, etc.).

In the embodiments of the present disclosure, the terminal device may be a mobile phone, a pad, a computer with a wireless transceiver function, a virtual reality (VR) terminal device, or an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, and the like. Of course, in the embodiments of the present disclosure, the terminal device may also be an NB-IoT terminal or an LTE enhanced MTC (eMTC)-based terminal. The terminal device involved in the embodiments of the present disclosure may also be referred to as a terminal, a user equipment (UE), an access terminal device, a vehicle-mounted terminal, an industrial control terminal, a UE unit, a UE station, a mobile platform, a mobile station, a remote station, a remote terminal device, a mobile device, a UE terminal device, a wireless communication device, a UE agent, a UE apparatus, or the like. The terminal device may also be fixed or mobile.

By way of example and not limitation, in the embodiments of the present disclosure, the terminal device may also be a wearable device. The wearable device may also be referred to as a wearable smart device, which is a generic term of wearable devices that are intelligently designed and developed by applying wearable technologies to daily wear, such as glasses, gloves, watches, clothes and shoes. The wearable device is a portable device that is worn directly on the body or integrated into the user's clothes or accessories. The wearable device is not only a hardware device, but also realizes powerful functions through software support, data interaction and cloud interaction. Generalized wearable intelligent devices have full functions and large size, and may realize complete or partial functions without relying on smart phones, such as smart watches or smart glasses, as well as those that only focus on a certain type of application functions, which is necessary to be used in conjunction with other devices such as smart phones, such as various smart bracelets and smart jewelry for physical sign monitoring.

In the embodiments of the present disclosure, the network device may be a device for communicating with the terminal device. The network device may also be referred to as an access network device or a wireless access network device. For example, the network device may be a base station. The network device in the embodiments of the present disclosure may be a radio access network (RAN) node (or device) that accesses the terminal device to a wireless network. The base station may broadly cover or be interchangeable with various names, such as a NodeB, an evolved NodeB (eNB), a next generation NodeB (gNB), a relay station, an access point, a transmitting and receiving point (TRP), a transmitting point (TP), a main station MeNB, a secondary station SeNB, an MSR node, a home base station, a network controller, an access node, a wireless node, an access point (AP), a transmitting and receiving node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may also be a communication module, a modem, or a chip disposed within the aforementioned devices or apparatuses. The base station may also be a mobile switching center, a device that functions as a base station in device-to-device D2D, vehicle-to-everything (V2X), machine-to-machine (M2M) communications, a network-side device in a 6G network, a device that functions as a base station in a future communication system, or the like. The base station may support networks of the same or different access technologies. The specific technology and the specific device form employed by the network device are not limited in the embodiments of the present disclosure.

The base station may be fixed or mobile. For example, a helicopter or drone may be configured to act as a mobile base station, and one or more cells may move based on the location of the mobile base station. In another example, a helicopter or drone may be configured to act as a device that communicates with another base station.

In some deployments, the network device in the embodiments of the present disclosure may be a CU or a DU, or the network device may include a CU and a DU. The gNB may also include an AAU.

The network device and the terminal device may be deployed on land, including indoor or outdoor, handheld or vehicle-mounted. The network device and the terminal device may also be deployed on the water. The network device and the terminal device may also be deployed on aircrafts, balloons and satellites in the air. The scenarios in which the network device and the terminal device are located are not limited in the embodiments of the present disclosure.

By way of example and not limitation, in the embodiments of the present disclosure, the network device may have mobile characteristics, e.g., the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments of the present disclosure, the network device may also be a base station arranged on land, water or another location.

In the embodiments of the present disclosure, the network device may provide services for a cell, and the terminal device communicates with the network device through a transmission resource (e.g., a frequency domain resource, or a spectrum resource) used by the cell. The cell may be a cell corresponding to the network device (e.g., base station). The cell may belong to a macro base station or a base station corresponding to a small cell. The small cell may include a metro cell, a micro cell, a pico cell, a femto cell, and the like. These small cells have the characteristics of small coverage and low transmission power, and are suitable for providing high-speed data transmission services.

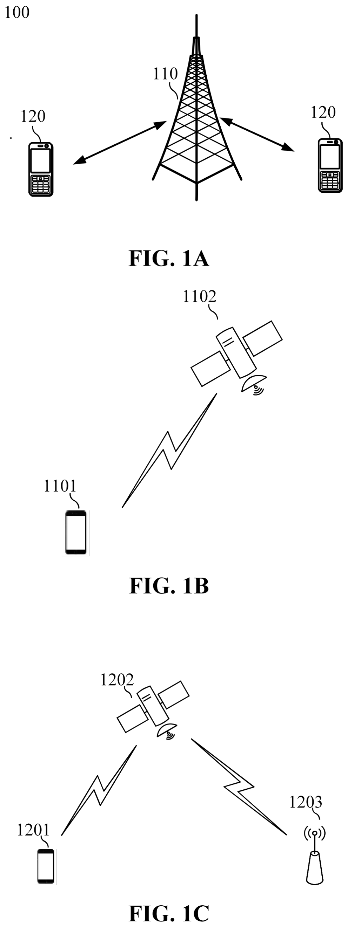

Exemplarily, FIG. 1A is a schematic diagram of a communication system architecture according to an embodiment of the present disclosure. As illustrated in FIG. 1A, the communication system 100 may include a network device 110, and the network device 110 may be a device that communicates with a terminal device 120 (or referred to as a communication terminal, or a terminal). The network device 110 may provide communication coverage for a particular geographic area and may communicate with the terminal devices within the coverage.

FIG. 1A exemplarily illustrates one network device and two terminal devices. In some embodiments of the present disclosure, the communication system 100 may include multiple network devices, and other numbers of terminal devices may be included within the coverage of each network device, which is not limited in the embodiments of the present disclosure.

Exemplarily, FIG. 1B is a schematic diagram of another communication system architecture according to an embodiment of the present disclosure. Referring to FIG. 1B, a terminal device 1101 and a satellite 1102 are included. Wireless communication may be established between the terminal device 1101 and the satellite 1102. The network formed between the terminal device 1101 and the satellite 1102 may also be referred to as an NTN. In the communication system architecture illustrated in FIG. 1B, the satellite 1102 may have the function of a base station, and direct communication may be established between the terminal device 1101 and the satellite 1102. Under the system architecture, the satellite 1102 may be referred to as a network device. In some embodiments of the present disclosure, the communication system may include multiple network devices 1102, and other numbers of terminal devices may be included within the coverage of each network device 1102, which is not limited in the embodiments of the present disclosure.

Exemplarily, FIG. 1C is a schematic diagram of yet another communication system architecture according to an embodiment of the present disclosure. Referring to FIG. 1C, a terminal device 1201, a satellite 1202 and a base station 1203 are included. Wireless communication may be established between the terminal device 1201 and the satellite 1202, and communication may be established between the satellite 1202 and the base station 1203. The network formed among the terminal device 1201, the satellite 1202 and the base station 1203 may also be referred to as an NTN. In the communication system architecture illustrated in FIG. 1C, the satellite 1202 may not have the function of a base station. The communication between the terminal device 1201 and the base station 1203 requires the relay through the satellite 1202. Under such system architecture, the base station 1203 may be referred to as a network device. In some embodiments of the present disclosure, the communication system may include multiple network devices 1203, and other numbers of terminal devices may be included within the coverage of each network device 1203, which is not limited in the embodiments of the present disclosure.

It should be noted that FIGS. 1A to 1C illustrate, by way of example only, the system to which the present disclosure is applicable, although the method illustrated in the embodiments of the present disclosure may also be applied to other systems, such as a 5G communication system, an LTE communication system, and the like, which are not specifically limited in the embodiments of the present disclosure.

In some embodiments of the present disclosure, the wireless communication systems illustrated in FIGS. 1A to 1C may also include other network entities such as a mobility management entity (MME), an access and mobility management function (AMF), and the like, which are not limited in the embodiment of the present disclosure.

It should be understood that, in the embodiment of the present disclosure, a device having a communication function in the network/system may be referred to as a communication device. Taking the communication system 100 illustrated in FIG. 1A as an example, the communication device may include a network device 110 and a terminal device 120, both having the communication function. The network device 110 and the terminal device 120 may be specific devices described above, which will not be elaborated herein. The communication device may also include other devices in the communication system 100, such as, a network controller, a mobility management entity, and other network entities, which are not limited in the embodiments of the present disclosure.

It should be understood that "indicate/indication" mentioned in the embodiments of the present disclosure may be direct indication, or may be indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B.

In the description of the embodiments of the present disclosure, the term "correspond/correspondence" may represent that there is a direct or indirect correspondence between the two objects; or, may represent that there is an association relationship between two objects; or, may be a relationship between indicating and being indicated, or between configuring and being configured, etc.

In the embodiments of the present disclosure, the term "configure/configuration" may include configuration through at least one of the following: a system message, radio resource control (RRC) signaling, or a media access control control element (MAC CE).

In some embodiments of the present disclosure, the term "predefined" or "preset" may be implemented by pre-storing corresponding codes, tables, or other manners for indicating relevant information in devices (e.g., including a terminal device and a network device). The specific implementation thereof is not limited in the present disclosure. For example, "predefined" may refer to those defined in a protocol.

In some embodiments of the present disclosure, the term "protocol" may refer to a standard protocol in the field of communications, which may include, for example, an LTE protocol, an NR protocol, and relevant protocols applied in the future communication system, which is not limited in the present disclosure.

For convenience of understanding, some relevant technical knowledge involved in the embodiments of the present disclosure may be introduced firstly. The following related technologies may be combined with the technical solutions in the embodiments of the present disclosure in any manner as optional solutions, and all of such combinations fall within the scope of protection of the embodiments of the present disclosure. The embodiments of the present disclosure include at least some of the following contents.

### Radio resource control (RRC) states and mobility management

Currently, three RRC states of the terminal device are defined in the protocol: RRC_connected state, RRC_idle state, and RRC_inactive state.

The RRC_connected state may refer to a state in which the terminal device is when the terminal device has completed the random access process but does not perform RRC release. There is an RRC connection between the terminal device and the network device (e.g., an access network device). In the RRC_connected state, the terminal device may perform data transmission with the network device, such as downlink data transmission and/or uplink data transmission. Alternatively, the terminal device may also perform transmission with the network device on data channel and/or control channel specific to the terminal device, to transmit the specific information or unicast information of the terminal device.

In the RRC_connected state, the network device may determine cell-level location information of the terminal device. That is, the network device may determine a cell to which the terminal device belongs. In the RRC_connected state, after the terminal device undergoes a location movement, such as moving from one cell to another cell, the network device may control the terminal device to perform a cell handover. It can be seen that the mobility management of the terminal device in the RRC_connected state may include the cell handover. In addition, the mobility management of the terminal device in the RRC_connected state may be controlled by the network device. Accordingly, the terminal device may hand over to a designated cell based on an instruction issued by the network device.

The RRC_idle state refers to a state in which the terminal device is when the terminal device resides in a cell but does not perform random access. The terminal device generally enters the RRC_idle state after being powered on or after the RRC release. In the RRC_idle state, there is no RRC connection between the terminal device and the network device (e.g., a resident network device). The network device does not store the context of the terminal device, and no connection for the terminal device is established between the network device and the core network. If the terminal device needs to enter the RRC_connected state from the RRC_idle state, it is required to initiate an RRC connection establishment process.

In the RRC_idle state, the core network (CN) may transmit a paging message to the terminal device. That is, the paging process may be triggered by the CN. Optionally, the paging area may also be configured by the CN. In some cases, for the terminal device in the RRC_idle state, the terminal device may initiate a cell reselection process when the terminal device undergoes a location movement (e.g., moving from one cell to another cell). In other cases, for the terminal device in the RRC_idle state, the terminal device may initiate a cell selection process when the terminal device needs to access a cell. That is, the mobility management of the terminal device in the RRC_idle state may include the cell reselection and/or the cell selection.

The RRC_inactive state is a state defined for reducing air interface signaling, quickly restoring wireless connection and quickly restoring data service. The RRC_inactive state is a state between the connected state and the idle state. The terminal device had previously entered the RRC_connected state, and then released the RRC connection with the network device; but the network device has stored the context of the terminal device. In addition, the connection for the terminal device established between the network device and the core network has not been released. That is, the user plane bearer and the control plane bearer between the RAN and the CN are still maintained, i.e., there is a CN-NR connection.

In the RRC_inactive state, the RAN may transmit a paging message to the terminal device. That is, the paging process may be triggered by the RAN. The RAN-based paging area is managed by the RAN. The network device may determine that the location of the terminal device is at the RAN-based paging area level.

### NTN

Currently, the 3rd generation partnership project (3GPP) is researching NTN technology. The NTN generally utilizes the manner of satellite communication to provide communication service(s) for ground users. Compared with terrestrial cellular communication, the satellite communication has many unique advantages.

Firstly, the satellite communication is not restricted by geographic regions of the users. For example, a general terrestrial communication network cannot cover areas where network devices cannot be deployed, such as oceans, mountains, deserts, etc. Alternatively, the terrestrial communication network does not cover some sparsely populated areas. For the satellite communication, since a single satellite may cover a large terrestrial area and satellites can orbit around the earth, every corner of the Earth may be theoretically covered by the satellite communication network.

Secondly, the satellite communication has great social value. The satellite communication may cover remote mountainous areas, poor and underdeveloped countries or regions at a low cost, so that people in such areas/regions can enjoy advanced voice communication and mobile Internet technology. From this perspective, the satellite communication is conducive to narrowing the digital divide with developed regions and promoting the development of such areas/regions.

Thirdly, the satellite communication has the advantage of a long communication distance, and the communication cost does not significantly increase as the communication distance increases.

Finally, the satellite communication has a high stability and is not limited by natural disasters.

Communication satellites, based on their orbital altitudes, are classified into low-earth orbit (LEO) satellites, medium-earth orbit (MEO) satellites, geostationary earth orbit (GEO) satellites, high elliptical orbit (HEO) satellites and so on. Currently, the main research focuses on the LEO satellites and the GEO satellites.

The altitude of the LEO satellites generally ranges from 500 km to 1500 km; and accordingly, the orbital period of the LEO satellites is approximately 1.5 hours to 2 hours. For the LEO satellites, the signal propagation delay of single-hop communication between users is generally less than 20 ms. The maximum satellite visibility time of the LEO satellites is approximately 20 minutes. The LEO satellites have the advantages of short signal propagation distance, less link loss, and low transmission power requirement for the terminal device of the user.

The orbital altitude of the GEO satellites is 35786 km. The rotation period of the GEO satellites around the Earth is 24 hours. For the GEO satellites, the signal propagation delay of single-hop communication between users is generally approximately 250 ms.

In order to ensure the satellite coverage and improve the system capacity of the entire satellite communication system, satellites generally use multiple beams to cover the terrestrial areas. Therefore, a single satellite can form dozens or even hundreds of beams to cover the terrestrial areas. One beam of the satellite can cover the terrestrial areas with a diameter of tens to hundreds of kilometers.

Currently, NTN systems include NR-NTN systems and internet of things (IoT)-NTN systems.

### Satellite Network Architecture

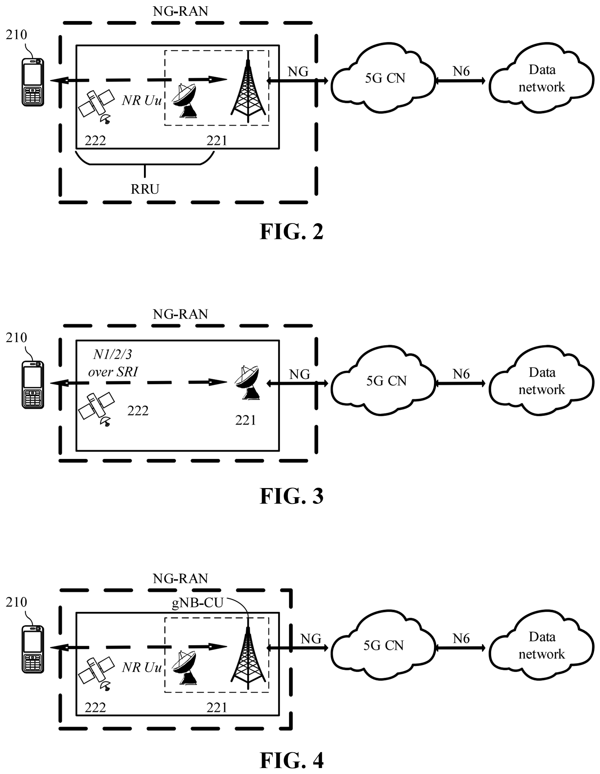

Currently, 3GPP considers two types of satellites: transparent payload satellites and regenerative payload satellites. In conjunction with FIGS. 2 to 4, the network architecture including the transparent payload satellites and the network architecture including the regenerative payload satellites are described below.

In the satellite network architecture illustrated in FIGS. 2 to 4, the satellite network architecture may include a terminal device 210, a satellite node 222, and a ground receiving station 221 (referred to as "ground station" for short). There is wireless communication between the terminal device 210 and the satellite node 222. The terminal device 210 may transmit data to the satellite node 222 through a link between the terminal device 210 and the satellite node 222. For example, the data may be transmitted to the satellite node 222 through a service link. Accordingly, after receiving the data, the satellite node 222 may transmit the data to the ground receiving station 221 through a link between the satellite node 222 and the ground receiving station 221. For example, the data may be delivered to the ground receiving station 221 through a wireless link, such as a feeder link. Accordingly, after receiving the data from the satellite node 222, the ground receiving station 221 transmits the data to the core network (data network), and then processes the data through the core network, such as data interaction with other terminals, etc. It can be understood that the service link herein refers to the link between the terminal device 210 and the satellite node 222, and the feeder link refers to the link between the satellite node 222 and the ground receiving station 221. In other possible embodiments, the link between the terminal device and the satellite node, and/or the link between the satellite node and the ground receiving station may also be represented by other terms, which are not limited in the present disclosure.

The satellite nodes 222 described above may be classified into three types. The first type of satellite nodes may be used only for forwarding, i.e., with only the transparent payload function. In some implementations, such satellite nodes may provide only one or more of the following: a radio frequency filtering function, a frequency conversion function, and a power amplification function. For such type of satellite nodes, the signal received from the terminal device is amplified and further transmitted to the ground receiving station without any processing on the satellite node, as illustrated in FIG. 2. Herein, the communication between the terminal device and the satellite node may be performed through an NR-Uu interface. The communication between the satellite node and the ground receiving station (such as including an NTN remote radio unit (RRU) and a gNB) may be performed through the NR-Uu interface. The communication between the ground receiving station and a 5G core network (5G CN) may be performed through an N1/2/3 interface. The communication between the 5G CN and the data network may be performed through an N6 interface.

The second type of satellite nodes has the complete processing function of a base station. For the ground terminal device, the satellite node is a base station, and the communication between the satellite node and the terminal device is basically the same as normal 5G communication, as illustrated in FIG. 3. In some implementations, such type of satellite nodes may also provide one or more of the following: a demodulation function, a decoding function, a routing function, a conversion function, an encoding function, and a modulation function. Herein, the communication between the terminal device and the satellite node may be performed through the NR-Uu interface. The communication between the satellite node and the ground receiving station may be performed through a satellite radio interface (SRI), and the SRI interface may be used to transmit an interface message (such as N2/N3 interface message) between the satellite node and the 5G CN. The communication between the ground receiving station and the 5G CN may be performed through the N1/2/3 interface. The communication between the 5G CN and the data network may be performed through the N6 interface.

The third type of satellite nodes has the processing function of a DU. For the ground terminal device, the satellite node is a DU, and the communication between the satellite node and the terminal device is basically the same as the communication between the terminal device and the DU in a normal 5G terrestrial communication system, as illustrated in FIG. 4. Herein, the communication between the terminal device and the satellite node may be performed through the NR-Uu interface. The communication between the satellite node and the ground receiving station (such as including a gNB-CU) may be performed through the SRI interface, and the SRI interface may transmit a F1 interface message between the satellite and the ground receiving station. The communication between the ground receiving station and the 5G CN may be performed through the N1/2/3 interface. The communication between the 5G CN and the data network may be performed through the N6 interface.

### Store-and-forward (SF) mode

Currently, 3GPP is considering the satellites that support to operate in a store-and-forward mode. The store-and-forward mode means that, in the NTN network, the service link used by the satellite to serve the users and the feeder link between the satellite and the ground gateway are not available at the same time. Therefore, the satellite needs to store the data to be transmitted when one link is connected, and forward the data when another link is connected. This can reduce the deployment cost of the ground gateway and improve the deployment flexibility. That is, it is not necessary to deploy the ground gateway in an area close to the user. Such store-and-forward mode is applicable to services that are less sensitive to time-delay requirements. In other words, the store-and-forward mode is applicable to the services with less strict time-delay requirements.

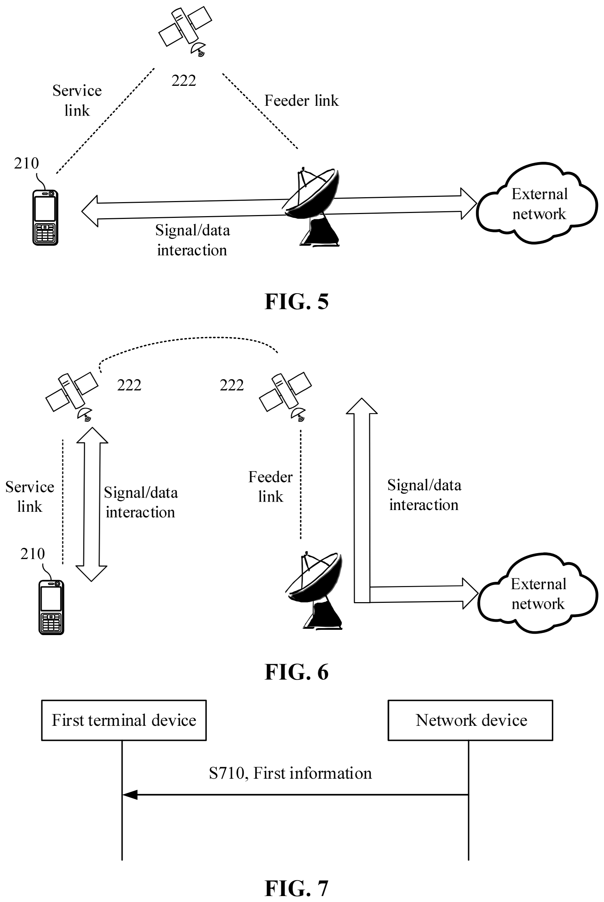

For convenience of understanding, the communication processes of the satellites operating in the normal mode and the store-and-forward mode are described below with reference to FIGS. 5 and 6, respectively.

Referring to FIG. 5, when the satellite operates in the normal mode, and the terminal device interacts the signaling or data with the ground receiving station through the satellite, the service link and the feeder link are required to be available at the same time. Therefore, the end-to-end connection between the terminal device and the ground receiving station through the satellite is continuous.

Referring to FIG. 6, when the satellite operates in the store-and-forward mode, the service link and the feeder link are not available at the same time, and the operation of the terminal device interacting the signaling or data with the ground receiving station through the satellite may include the following operations 1 and 2.

In the operation 1, the signaling/data interaction is performed between the terminal device and the satellite through the service link. At this time, no feeder link connection is established between the satellite and the ground receiving station, and the satellite will store the data to be transmitted firstly. After that, as the satellite moves away from the terminal device, the satellite disconnects its service link with the terminal device.

In the operation 2, when the satellite flies over the ground receiving station, the satellite establishes the connection with the ground receiving station, so that the satellite may communicate with the ground receiving station through the feeder link. At this time, the satellite may transmit the stored data to be transmitted to the ground receiving station through the feeder link.

It should be noted that, in conjunction with the operations 1 and 2, the process of transmitting the data to be transmitted from the terminal device to the ground receiving station through the satellite is described above. Accordingly, the process of transmitting the data to be transmitted from the ground receiving station to the terminal device through the satellite is similar. For brevity, details will not be repeated herein again.

### Cell barred mechanism

In some communication systems (e.g., LTE systems), a system message (e.g., a system information block (SIB) 1) broadcast by the network device may carry cell barred information 1 (also referred to as "cellBarred"). The cell barred information is used to indicate whether the current cell allows access. In other communication systems (e.g., NTN systems), a system message (e.g., SIB1) broadcast by the network device may carry cell barred information 2 (also referred to as "cellBarredNTN"). The cell barred information 2 may implicitly indicate the network type of the cell. That is, the cell barred information 2 is used to indicate whether the cell is available for NTN connection. Accordingly, when performing cell selection, a terminal device with NTN capability (NTN-capable UE) may firstly acquire the SIB1, and then determine whether the corresponding cell supports the NTN connection through the cell barred information 2 in the SIB1. If the cell barred information 2 is barred or the cell barred information 2 is not carried in the SIB1, the terminal device with NTN capability may consider that the cell is in a state in which the access is barred.

### Based on Control Plane Optimization Mode and User Plane Optimization Mode

Generally, narrow band Internet of Things (NB-IoT) communication has the following characteristics: (1) the total data traffic of the NB-IoT user plane is small; (2) the number of NB-IoT terminals in a single cell is large, and the number of establishment and release of the control plane is high; (3) to transmit and receive the data of only few bytes, the network signaling overhead consumed by the terminal entering the connected state from the idle state is much larger than the data payload itself. Based on the above characteristics, the NB-IoT has enhanced and optimized the control plane (CP) and the user plane (UP) at the system architecture level, which are respectively introduced below.

For the control plane optimization mode (also referred to as "control plane CIoT EPS optimization", or "CP scheme" for short), it is introduced for more efficient transmission of CIoT small data packet services. The core content of the control plane optimization mode is that user data may be transmitted through the control plane without establishing an air interface DRB bearer. Under the control plane optimization mode, the user data and the non-access stratum (NAS) layer signaling of the terminal device may be transmitted to the MME together, and may be forwarded by the MME to the serving gateway/packet data network gateway (S/P-GW) or service capability exposure function (SCEF). When the data is transmitted based on the control plane optimization mode, there is no need to activate the security function between the terminal device and the network device, and the security of air interface data transmission may be guaranteed by the NAS. Herein, if the data is uplink data, the uplink data may be carried in a NAS message included in an uplink RRC message; and if the data is downlink data, the downlink data may be carried in a NAS message included in a downlink RRC message.

For the user plane optimization mode (also referred to "user plane CloT EPS optimization", or "UP scheme" for short), user data is transmitted through the user plane bearer. Considering the signaling overhead during the establishment/release process of the user plane bearer, the efficiency is obviously very low for NB-IoT small data packet services. Therefore, a new critical process (i.e., the RRC connection suspension and resumption process) is added in the user plane optimization mode. That is, when there is no data transmission, the RRC connection is not released directly by the terminal device; instead, the network device firstly caches the access stratum (AS) context of the terminal device before releasing the RRC connection, thereby enabling the terminal device to enter the suspend state. This process is also referred to as the "access stratum context caching process".

As mentioned above, with the development of technology, in communication scenarios based on NTN, various satellite operating modes have been introduced, such as the transparent payload operating mode and the store-and-forward mode described above. However, due to the limited information related to the NTN communication scenario that is acquired by the accessed terminal device, the accessed terminal device may experience an unsmooth NTN communication process, and may even be unable to communicate in the NTN communication scenario.

Therefore, for the aforementioned problem, the embodiments of the present disclosure provide a method for wireless communication. In the method, the network device may transmit the first information associated with the NTN communication to the first terminal device, and accordingly, the first terminal device may perform a subsequent communication process based on the first information. Compared with the conventional solution where the terminal device communicates in accordance with the preconfigured communication modes, it is beneficial to improving the possibility of successful communication of the terminal device. For convenience of understanding, a method for wireless communication according to an embodiment of the present disclosure is introduced hereinafter in conjunction with FIG. 7. The method illustrated in FIG. 7 includes an operation S710.

At block S710, a network device transmits first information to a first terminal device.

In some implementations, the first terminal device is a terminal device whose RRC connection is in a suspend state.

The transmission manner of the first information is not limited in the embodiments of the present disclosure. In some implementations, the first information may be transmitted in a broadcast manner. Of course, in the embodiments of the present disclosure, the first information may also be transmitted in a unicast manner.

In other implementations, the first information may be carried in a system message. For example, the first information may be carried in SIB1. For another example, the first information may be carried in MIB. For yet another example, the first information may be carried in the SIB19. For still another example, the first information may be carried in SIB31. Of course, the first information may also be transmitted separately as a dedicated signaling.

For convenience of understanding, the first information in the embodiments of the present disclosure is described below in conjunction with three embodiments according to the embodiments of the present disclosure.

**Embodiment 1:** the first information includes first cell barred information and/or second cell barred information.

As described above, in some protocols (e.g., R17/R18 NTN communication), cell barred information 2 (also referred to as "cellBarred-NTN") is introduced to indicate whether the current cell is available for NTN connection. Accordingly, the terminal device may determine whether to access the cell based on the cell barred information. Currently, in the cell that is available for the NTN connection, the satellite may operate in multiple different modes. In such case, the terminal device may be unable to communicate with the satellite after the access, resulting in a decrease in communication efficiency of the terminal device.

Therefore, for the aforementioned problem, the embodiments of the present disclosure propose that the first cell barred information and/or the second cell barred information may be carried in the first information. In such way, the access of the first type of terminal device and/or the second type of terminal device may be controlled through the first cell barred information and/or the second cell barred information, which contributes to improving the communication efficiency of the high-end device.

The above first cell barred information whether the first cell allows access by the first type of terminal device. In other words, the first cell barred information is used to indicate that the first cell allows or bars the access by the first type of terminal device. Therefore, the first cell barred information is also referred to as "access restriction indication information".

In some implementations, the terminal type with the first type of terminal device may be related to the operating mode of the satellite. Taking the operating mode of the satellite including the store-and-forward mode as an example, the first type of terminal device may support the satellite to operate in the store-and-forward mode. Accordingly, the first cell barred information is used to indicate whether the first cell allows the access by the terminal device that supports the satellite to operate in the store-and-forward mode. Alternatively, it may be understood that the first cell barred information is used to indicate whether the first cell supports the satellite to operate in the store-and-forward mode. That is, the first cell barred information is associated with the store-and-forward mode, and thus, the first cell barred information may also be referred to as "cellBarred-NTN-SF".

It should be noted that, taking the first cell barred information represented by the "cellBarred-NTN-SF" as an example, if the first cell barred information is set to be "barred", the first cell barred information is used to indicate that the first cell bars the access by the first type of terminal device. Conversely, if the first cell barred information is set to be "notbarred", the first cell barred information is used to indicate that the first cell allows the access by the first type of terminal device.

The above second cell barred information is used to indicate whether the first cell allows access by the second type of terminal device. In other words, the second cell barred information is used to indicate that the first cell allows or bars the access by the second type of terminal device. Therefore, the first cell barred information is also referred to as "access restriction indication information".

In some implementations, the terminal type with the second type of terminal device may be related to the operating mode of the satellite. Taking the operating mode of the satellite including the store-and-forward operating mode as an example, the second type of terminal device may not support the satellite to operate in the store-and-forward mode. Accordingly, the second cell barred information is used to indicate whether the first cell allows the access by the terminal device that supports the satellite to operate in the store-and-forward mode. Alternatively, it may be understood that the second cell barred information is used to indicate whether the first cell supports the satellite to operate in the store-and-forward mode. That is, the second cell barred information is associated with the store-and-forward mode, and thus, the second cell barred information may also be referred to as "cellBarred-NTN-SF".

It should be noted that, taking the second cell barred information represented by the "cellBarred-NTN-SF" as an example, if the second cell barred information is set to be "barred", the second cell barred information is used to indicate that the first cell bars the access by the second type of terminal device. Conversely, if the second cell barred information is set to be "notbarred", the second cell barred information is used to indicate that the first cell allows the access by the second type of terminal device.

In some implementations, both of the first type of terminal device and the second type of terminal device have the NTN capability, and the NTN capability of the first type of terminal device may not be completely identical to the NTN capability of the second type of terminal device. Herein, the capability of the first type of terminal device being not completely identical to the capability of the second type of terminal device may include that both of the first type of terminal device and the second type of terminal device support the NTN communication; however, the first type of terminal device supports the satellite to operate in the store-and-forward mode, while the second type of terminal device does not support the satellite to operate in the store-and-forward mode.

Of course, the first type of terminal device and the second type of terminal device are not specifically limited in the embodiments of the present disclosure. For another example, the capability of the first type of terminal device being not completely identical to the capability of the second type of terminal device may include that both of the first type of terminal device and the second type of terminal device support the NTN communication; however, the first type of terminal device supports the satellite to operate in the store-and-forward mode, while the second type of terminal device supports the satellite to operate in the transparent payload mode.

The first cell barred information and/or the second cell barred information according to the embodiments of the present disclosure are described above. In some scenarios, the above first cell barred information may be used in conjunction with the known cell barred information. For convenience of understanding, the known cell barred information including cell barred information 1 is described below as an example. The cell barred information 1 is used to indicate whether access to the first cell is allowed.

In some implementations, the cell barred information 1 and the first cell barred information may be used in conjunction with each other. Herein, the cell barred information 1 (also referred to as "cellBarred") is used to indicate whether the first cell allows access by a third type of terminal device. The third type of terminal device does not have the NTN capability. For example, the network device may transmit the cell barred information 1 and the first cell barred information to the first terminal device. Accordingly, the first terminal device may determine, based on the cell barred information 1, whether the first cell allows the access by the third type of terminal device, and determine, based on the first cell barred information, whether the first cell allows the access by the first type of terminal device. That is, if the cell barred information 1 indicates that the first cell allows the access by the third type of terminal device, and the first cell barred information indicates that the first cell allows the access by the first type of terminal device, then, the first terminal device may access to the first cell when the first terminal device is the first type of terminal device. Conversely, if the cell barred information 1 indicates that the first cell does not allow the access by the third type of terminal device, and the first cell barred information indicates that the first cell does not allow the access by the first type of terminal device, then, the first terminal device may not access to the first cell when the first terminal device is the first type of terminal device.

In other implementations, the cell barred information 1 and the second cell barred information may be used in conjunction with each other. Herein, the cell barred information 1 (also referred to as "cellBarred") is used to indicate whether the first cell allows the access by the third type of terminal device. The third type of terminal device does not have the NTN capability. For example, the network device may transmit the cell barred information 1 and the second cell barred information to the first terminal device. Accordingly, the first terminal device may determine, based on the cell barred information 1, whether the first cell allows the access by the third type of terminal device, and determine, based on the first cell barred information, whether the first cell allows the access by the second type of terminal device. That is, if the cell barred information 1 indicates that the first cell allows the access by the third type of terminal device, and the second cell barred information indicates that the first cell allows the access by the second type of terminal device, then, the first terminal device may access to the first cell when the first terminal device is the second type of terminal device. Conversely, if the cell barred information 1 indicates that the first cell does not allow the access by the third type of terminal device, and the second cell barred information indicates that the first cell does not allow the access by the second type of terminal device, then, the first terminal device may not access to the first cell when the first terminal device is the second type of terminal device.

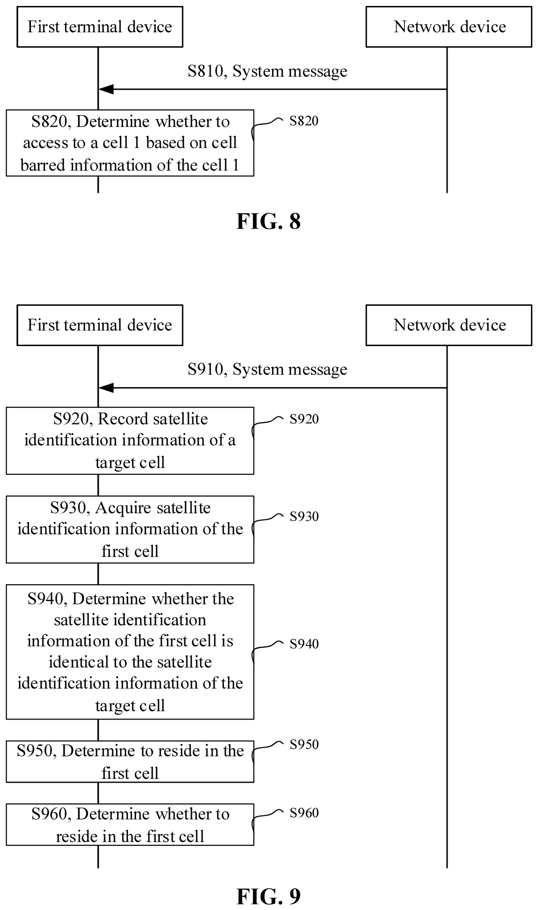

For convenience of understanding, taking the first cell being a cell 1 as an example, an access method according to the embodiment of the present disclosure is described below in conjunction with FIG. 8. The method illustrated in FIG. 8 includes the following operations S810 and S820. Assuming that the satellite in the cell 1 operates in the store-and-forward mode, the cell barred information "cellBarred" of the cell 1 is set to be barred to indicate that the terminal device without the NTN capability is not allowed to access, and the cell barred information "cellBarred-NTN" of the cell 1 is set to be barred to indicate that the terminal device that does not support the satellite to operate in the store-and-forward mode is not allowed to access. In addition, the first terminal device is the terminal device that supports the satellite to operate in the store-and-forward scenario.

At block S810, the network device transmits a system message in a broadcast manner.

In some implementations, the cell barred information "cellBarred-NTN-SF" carried in the system message is set to be allowed, which is used to indicate that the cell 1 allows the access by the terminal device that supports the satellite to operate in the store-and-forward mode.

At block S820, the first terminal device receives the system message and determines whether to access to the cell 1 based on cell barred information of the cell 1.

In some implementations, the first terminal device may determine that the cell 1 allows the access by the first terminal device based on the cell barred information of the cell 1 (cellBarred, cellBarred-NTN and cellBarred-NTN-SF). At such time, the first terminal device may select to access to the cell 1.

It should be noted that, in the above solutions, if the cell barred information "cellBarred-NTN" of the cell 1 is set to be barred, the cell 1 bars the access by the first terminal device. In such case, the first terminal device may select not to access to the cell 1.

In the embodiments of the present disclosure, by setting the cell barred information "cellBarred" and "cellBarred-NTN", it is possible to indicate that the terminal device that does not support the satellite to operate in the store-and-forward mode is barred from accessing to the first cell, which can contributes to avoiding the inappropriate terminal device (i.e., the terminal device that does not support the satellite to operate in the store-and-forward mode) from residing in the first cell.

In addition, the introduction of the cell barred information "cellBarred-NTN-SF" may control whether the terminal device that supports the satellite to operate in the store-and-forward mode is allowed to access to the first cell, which can facilitate the network device to flexibly control the access of such terminal device based on load condition of the first cell.

**Embodiment 2:** the first information may carry satellite identification information of the first cell.

As described above, for the first terminal device that performs data transmission based on the user plane optimization mode, its access stratum context is required to be stored in the network device (i.e., the satellite) corresponding to the cell, so as to save the signaling overhead required for establishing the user plane bearer. However, in some scenarios (e.g., when the satellites operate in the store-and-forward mode), there may be no inter-satellite link between the satellites, so that the access stratum context of the first terminal device cannot be transmitted between the satellites. In such case, if the satellite identification information of the first cell is different from the satellite identification information of the target cell, the network device in the first cell may be unable to acquire the access stratum context information of the first terminal device, resulting in the first terminal device being unable to perform the data transmission in the first cell based on the user plane optimization mode.

Therefore, in the embodiments of the present disclosure, by carrying the satellite identification information of the first cell in the first information, it is helpful for the first terminal device to determine whether to perform the data transmission based on the user plane optimization mode, thereby improving the accuracy of the data transmission.

The satellite identification information is not specifically limited in the embodiments of the present disclosure. For example, the satellite identification information may include an index of the satellite. For another example, the satellite identification information may include identifier (ID) information of the satellite.

In the embodiments of the present disclosure, by carrying the satellite identification information of the first cell in the first information, it is helpful for the first terminal device to determine whether to reside in the first cell and/or the data transmission mode in the first cell, thereby improving the communication efficiency of the first terminal device.

In some implementations, the satellite identification information of the first cell is used by the first terminal device to determine one or more of the following: whether to reside in the first cell; and the data transmission mode in the first cell. Herein, the data transmission mode in the first cell includes data transmission based on the user plane optimization mode and/or data transmission based on the control plane optimization mode.

In some implementations, the aforementioned determination for whether to reside in the first cell and/or the data transmission mode in the first cell may be based on the satellite identification information of the first cell and the satellite identification information of the target cell. For convenience of understanding, the target cell in the embodiments of the present disclosure is described below firstly.

The aforementioned target cell may be a cell in which the first terminal device is configured with suspendConfig information, or the target cell may be a cell in which the access stratum context of the first terminal device is stored. For example, the target cell may be the cell that configures the suspendConfig information for the first terminal device when the first terminal device enters the idle state from the connected state. For another example, the target cell may be the cell that configures the suspendConfig information for the first terminal device when the first terminal device enters the inactive state from the connected state. For yet another example, the target cell may be the cell that configures the suspendConfig information for the first terminal device when the first terminal device is released and enters the inactive state. For still another example, the target cell may be the cell that configures the suspendConfig information for the first terminal device when the first terminal device is released and enters the idle state.

In the embodiments of the present disclosure, the manner in which the first terminal device acquires the satellite identification information of the target cell is not limited. In some implementations, if the network device in the cell 1 configures the suspendConfig information for the first terminal device when the first terminal device is located in the cell 1, the first terminal device may record the satellite identification information of the current cell as the satellite identification information of the target cell.

Taking the case where the first information is used by the first terminal device to determine whether to reside in the first cell as an example, the first terminal device may determine whether to reside in the first cell based on the satellite identification information of the first cell and the satellite identification information of the target cell. In some implementations, if the satellite identification information of the first cell is identical to the satellite identification information of the target cell, the first terminal device may reside in the first cell.

In other words, if the satellite identification of the first cell is identical to the satellite identification of the target cell, the first cell also stores the access stratum context of the first terminal device. In such case, the first terminal device may reside in the first cell, so as to perform the subsequent data transmission in the first cell based on the user plane optimization mode, which contributes to reducing the signaling transmission overhead required for the user plane establishment and/or release process.

In other implementations, if the satellite identification information of the first cell is different from the satellite identification information of the target cell, the first terminal device may not reside in the first cell. Of course, in the embodiments of the present disclosure, if the satellite identification information of the first cell is different from the satellite identification information of the target cell, the first terminal device may reside in the first cell. For example, the user plane bearer may be re-established for the first terminal device in the first cell for the data transmission.

In other words, if the satellite identification of the first cell is different from the satellite identification of the target cell, the first cell does not store the access stratum context of the first terminal device. In such case, the first terminal device may not reside in the first cell, or the first terminal device may consider that the access to the first cell is barred. Of course, in such scenario, the first terminal device may further select to reside in the first cell.

It should be noted that, if the first terminal device does not reside in the first cell, the first terminal device may reselect another cell to reside in. Of course, in the embodiments of the present disclosure, the first terminal device may not reselect another cell to reside in.

Taking the case where the first information is used by the first terminal device to determine the data transmission mode in the first cell as an example, the first terminal device may determine the data transmission mode in the first cell based on the satellite identification information of the first cell and the satellite identification information of the target cell. In some implementations, if the satellite identification information of the first cell is identical to the satellite identification information of the target cell, the first terminal device performs the data transmission in the first cell based on the user plane optimization mode. Of course, in the embodiments of the present disclosure, if the satellite identification information of the first cell is identical to the satellite identification information of the target cell, the first terminal device may also perform the data transmission in the first cell based on other modes. For example, the first terminal device may perform the data transmission in the first cell based on the control plane optimization mode, which it is not limited in the embodiments of the present disclosure.

In other words, if the satellite identification information of the first cell is identical to the satellite identification information of the target cell, the first cell also stores the access stratum context of the first terminal device. In such case, the first terminal device may reside in the first cell and perform the data transmission in the first cell based on the user plane optimization mode, which contributes to reducing the signaling transmission overhead required for the user plane establishment and/or release process.

In some implementations, if the satellite identification information of the first cell is different from the satellite identification information of the target cell, the first terminal device does not perform the data transmission in the first cell based on the user plane optimization mode. For example, the first terminal device may perform the data transmission in the first cell based on the control plane optimization mode, which contributes to reducing the time-delay of the data transmission by the first terminal device.

In other words, if the satellite identification information of the first cell is different from the satellite identification information of the target cell, the first cell does not store the access stratum context of the first terminal device. In such case, the first terminal device may reside in the first cell and perform the data transmission in the first cell based on the control plane optimization mode, which contributes to reducing the time-delay required for the data transmission by the first terminal device.

It should be noted that, even if the first terminal device is initially configured to perform the data transmission based on the user plane optimization mode, when the satellite identification information of the first cell is different from the satellite identification information of the target cell, the first terminal device may also perform the data transmission based on the control plane optimization model.

For convenience of understanding, a method for wireless communication according to an embodiment of the present disclosure is described hereinafter in conjunction with FIG. 9. The method illustrated in FIG. 9 includes the following operations S910 to S960.

At block S910, a network device transmits a system message of a first cell in a broadcast manner.

In some implementations, the above system message carries satellite identification information of the first cell.

At block S920, a first terminal device records satellite identification information of a target cell.

For example, when the first terminal device enters the IDLE state or the INACTIVE state from the connected state, the network device in the cell 1 configures the suspendConfig information for the first terminal device. In such case, the first terminal device may record the satellite identification information of the cell 1 as the satellite identification information of the target cell.

At block S930, the first terminal device in a non-connected state reads the system message of the first cell and acquires the satellite identification information of the first cell.

At block S940, the first terminal device determines whether the satellite identification information of the first cell is identical to the satellite identification information of the target cell.

If the satellite identification information of the first cell is identical to the satellite identification information of the target cell, the operation S950 is performed. If the satellite identification information of the first cell is identical to the satellite identification information of the target cell, the operation S960 is performed.

At block S950, the first terminal device determines to reside in the first cell.

In some implementations, the first terminal device may perform the data transmission in the first cell based on the user plane optimization mode.

At block S960, the first terminal device determines whether to reside in the first cell.

In some implementations, if the first terminal device determines not to reside in the first cell, the first terminal device may reselect another cell to reside in.

In other implementations, if the first terminal device determines to reside in the first cell, the first terminal device may perform the data transmission in the first cell based on the control plane optimization mode.

As described above, for the first terminal device that performs the data transmission based on the user plane optimization mode, its access stratum context is required to be stored in the network device (i.e., the satellite) corresponding to the cell, so as to save the signaling overhead required for establishing the user plane bearer. However, in some scenarios (e.g., when the satellites operate in the store-and-forward mode), there may be no inter-satellite link between the satellites, so that the access stratum context of the first terminal device cannot be transmitted between the satellites. In such case, if the satellite identification information of the first cell is different from the satellite identification information of the target cell, the network device in the first cell may be unable to acquire the access stratum context information of the first terminal device, resulting in the first terminal device being unable to perform the data transmission in the first cell based on the user plane optimization mode. Therefore, in the embodiments of the present disclosure, by carrying the satellite identification information of the first cell in the first information, it is helpful for the first terminal device to determine whether to perform the data transmission based on the user plane optimization mode, thereby improving the accuracy of the data transmission. On the other hand, if the satellite identification information of the first cell is different from the satellite information of the target cell, the first terminal device may determine to reside in the first cell and perform the data transmission based on the control plane optimization scheme, which contributes to improving the possibility of the data transmission by the first terminal device.

**Embodiment 3:** the first information carries first indication information.

As described above, for the first terminal device that performs the data transmission based on the user plane optimization mode, its access stratum context is required to be stored in the network device (i.e., the satellite) corresponding to the cell, so as to save the signaling overhead required for establishing the user plane bearer. However, in some scenarios (e.g., when the satellites operate in the store-and-forward mode), there may be no inter-satellite link between the satellites, so that the access stratum context of the first terminal device cannot be transmitted between the satellites. In such case, if the satellite identification information of the first cell is different from the satellite identification information of the target cell, the network device in the first cell may be unable to acquire the access stratum context information of the first terminal device, resulting in the first terminal device being unable to perform the data transmission in the first cell based on the user plane optimization mode.

Therefore, for the above problem, in the embodiments of the present disclosure, by transmitting the first indication information to the first terminal device, the network device may indicate the first terminal device to switch from the user plane optimization mode to the control plane optimization mode. As such, the first terminal device may perform the data transmission based on the control plane optimization mode, which contributes to improving the possibility of data transmission by the first terminal device.

In some implementations, the first indication information is transmitted in case that a first condition is not met. The first condition includes one or more of following: the network device stores an access stratum context of the first terminal device; and the network device is capable of acquiring an access stratum context of the first terminal device from another network device.

Taking the case where the first condition includes that the network device stores the access stratum context of the first terminal device as an example, in some implementations, if the first condition is not met (i.e., the network device does not store the access stratum context of the first terminal device), the network device may indicate, through the first indication information, the terminal device to switch from the user plane optimization mode to the control plane optimization mode.

It should be noted that, if the first condition is met (i.e., the network device stores the access stratum context of the first terminal device), the first terminal device may perform the data transmission based on the user plane optimization mode.

Taking the case where the first condition includes that the network device is capable of acquiring the access stratum context of the first terminal device from another network device as an example, in some implementations, if the first condition is not met (i.e., the network device is not capable of acquiring the access stratum context of the first terminal device from another network device), the network device may indicate, through the first indication information, the first terminal device to switch from the user plane optimization mode to the control plane optimization mode.

It should be noted that, if the first condition is met (i.e., the network device stores the access stratum context of the first terminal device), the first terminal device may perform the data transmission based on the user plane optimization mode.

In addition, the above explanation takes the example where the first condition may be used independently for illustration. In the embodiments of the present disclosure, the aforementioned first conditions may be used in combination, which contributes to improving the possibility of the data transmission performed by the first terminal device based on the user plane optimization mode. For example, the first condition includes that the network device stores the access stratum context of the first terminal device, and the network device is capable of acquiring the access stratum context of the first terminal device from another network device. Accordingly, if the first condition is not met (i.e., the network device is not capable of acquiring the access stratum context of the first terminal device from another network device, and the network device does not store the access stratum context of the first terminal device), the network device may indicate, through the first indication information, the first terminal device to switch from the user plane optimization mode to the control plane optimization mode.

In some implementations, the first indication information is carried in a response message for a connection resume request message that is transmitted by the first terminal device. For example, the first terminal device may transmit the connection resume request message to the network device, to request the network device to resume the connection. Accordingly, in response to receiving the connection resume request message, the network device may determine whether the access stratum context of the first terminal device can be acquired. At this time, if the network device determines that the access stratum context of the first terminal device cannot be acquired, the network device may indicate, through the first indication information, the first terminal device to switch from the user plane optimization mode to the control plane optimization mode.

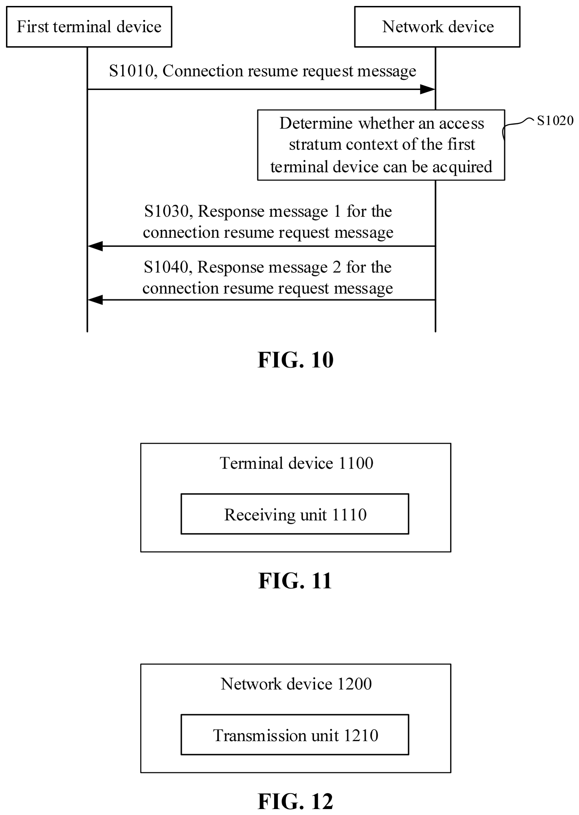

For convenience of understanding, a method for wireless communication according to another embodiment of the present disclosure is described hereinafter in conjunction with FIG. 10. The method illustrated in FIG. 10 includes the following operations S1010 to S1040. It is assumed that the first terminal device is configured to perform data transmission based on the user plane optimization mode, that is, the NAS layer of the first terminal device selects to perform the data transmission based on the user plane optimization mode.

At block S1010, a first terminal device transmits a connection resume request message to a network device to initiate a connection resume process.

In some implementations, if the data to be transmitted is a small data transmission (SDT) or early data transmission (EDT), the data to be transmitted may be multiplexed with the connection resume request message and transmitted to the network device in Msg3 of the random access process.

At block S1020, in response to receiving the connection resume request message, the network device determines whether an access stratum context of the first terminal device can be acquired.

If the network device cannot acquire the access stratum context of the first terminal device, the operation S1030 is performed. If the network device can acquire the access stratum context of the first terminal device, the operation S1040 is performed.

At block S1030, the network device transmits a response message 1 for the connection resume request message to the first terminal device.

In some implementations, the above response message 1 carries first indication information to indicate the first terminal device to switch from the user plane optimization mode to the control plane optimization mode. Accordingly, in response to receiving the response message 1, the first terminal device may perform the data transmission based on the control plane optimization mode. For example, the first terminal device transmits the data to be transmitted by using the NAS signaling.

At block S1040, the network device transmits a response message 2 for the connection resume request message to the first terminal device.

In some implementations, the above response message 2 indicates the first terminal device to enter the RRC_connected state and perform the data transmission based on the user plane optimization mode. Alternatively, the above response message 2 indicates the first terminal device to respond to a connection release message after receiving data (e.g., SDT, EDT), etc.

In the embodiments of the present disclosure, if the network device does not store the access stratum context of the first terminal device, and the network device cannot acquire the access stratum context of the first terminal device, the data transmission based on the user plane optimization mode cannot be completed at this time. That is, the network device cannot correctly receive the data of the first terminal device (e.g., the network device is unable to determine the access stratum security key used by the first terminal device for encrypting the data). In such case, the first terminal device may fall back, based on the first indication information, to the control plane-based optimization mode, and perform the data transmission by using the NAS signaling. Since the data transmission does not depend on the AS security key, it is beneficial to improving the probability that the data of the first terminal device is correctly received by the network device.

The method embodiments of the present disclosure are described in detail above in conjunction with FIGS. 1 to 10. The apparatus embodiments of the present disclosure are described in detail below in conjunction with FIGS. 11 to 13. It should be understood that the description of the method embodiments corresponds to the description of the apparatus embodiments. Therefore, for sections not described in detail, reference may be made to the preceding method embodiments.

FIG. 11 is a schematic diagram of a terminal device according to an embodiment of the present disclosure. The terminal device illustrated in FIG. 11 is a first terminal device, and the terminal device 1100 illustrated in FIG. 11 includes a receiving unit 1110.

The receiving unit is configured to receive first information from a network device. The first information includes one or more of the following: first cell barred information; second cell barred information; satellite identification information of a first cell; and first indication information. Herein, the first cell barred information is used for indicating whether a first cell allows access by a first type of terminal device; the second cell barred information is used for indicating whether a first cell allows access by a second type of terminal device; and the first indication information is used for indicating the first terminal device to switch from a user plane optimization mode to a control plane optimization mode. Each of the first type of terminal device and the second type of terminal device has NTN capability, and the NTN capability of the first type of terminal device is not completely identical to the NTN capability of the second type of terminal device.

In some implementations, the first type of terminal device supports a satellite to operate in a store-and-forward mode; and/or the second type of terminal device does not support the satellite to operate in a store-and-forward mode.

In some implementations, the satellite identification information of the first cell is used by the first terminal device to determine one or more of the following: whether to reside in the first cell; and a data transmission mode in the first cell.

In some implementations, the terminal device further includes that: if the satellite identification information of the first cell is identical to satellite identification information of a target cell, the first terminal device resides in the first cell; and/or if the satellite identification information of the first cell is different from the satellite identification information of the target cell, the first terminal device does not reside in the first cell.

In some implementations, the terminal device further includes that: if the satellite identification information of the first cell is identical to the satellite identification information of the target cell, the first terminal device performs data transmission in the first cell based on the user plane optimization mode; and/or if the satellite identification information of the first cell is different from the satellite identification information of the target cell, the first terminal device does not perform the data transmission in the first cell based on the user plane optimization mode.

In some implementations, the operation of the first terminal device not performing the data transmission in the first cell based on the user plane optimization mode includes that: the first terminal device performs the data transmission in the first cell based on the control plane optimization mode.

In some implementations, the target cell includes a cell that configures suspendConfig information for the first terminal device. Alternatively, the target cell is a cell that stores an access stratum context of the first terminal device.

In some implementations, the satellite identification information of the first cell is carried in system information of the first cell.

In some implementations, the first indication information is carried in a response message for a connection resume request message that is transmitted by the first terminal device.

In some implementations, the first indication information is transmitted in case that a first condition is not met. The first condition is one or more of the following: the network device stores an access stratum context of the first terminal device; and the network device is capable of acquiring an access stratum context of the first terminal device from another network device.

In some implementations, the first terminal device is a terminal device whose RRC connection is in a suspend state.

In some implementations, the first information further includes third cell barred information. The third cell barred information is used to indicate whether the first cell allows access by a third type of terminal device. The third type of terminal device does not have the NTN capability.

In some implementations, the first terminal device is an NB-IoT terminal or an eMTC terminal.

FIG. 12 is a schematic diagram of a network device according to an embodiment of the present disclosure. The network device 1200 illustrated in FIG. 12 includes a transmission unit 1210.

The transmission unit is configured to transmit first information. The first information includes one or more of the following: first cell barred information; second cell barred information; satellite identification information of a first cell; and first indication information. Herein, the first cell barred information is used for indicating whether a first cell allows access by a first type of terminal device; the second cell barred information is used for indicating whether a first cell allows access by a second type of terminal device; and the first indication information is used for indicating a first terminal device to switch from a user plane optimization mode to a control plane optimization mode. Each of the first type of terminal device and the second type of terminal device has NTN capability, and the NTN capability of the first type of terminal device is not completely identical to the NTN capability of the second type of terminal device.

In some implementations, the first type of terminal device supports a satellite to operate in a store-and-forward mode; and/or the second type of terminal device does not support the satellite to operate in a store-and-forward mode.

In some implementations, the satellite identification information of the first cell is used by the first terminal device to determine one or more of the following: whether to reside in the first cell; and a data transmission mode in the first cell.

In some implementations, if the satellite identification information of the first cell is identical to satellite identification information of a target cell, the first terminal device resides in the first cell; and/or if the satellite identification information of the first cell is different from the satellite identification information of the target cell, the first terminal device does not reside in the first cell.

In some implementations, if the satellite identification information of the first cell is identical to the satellite identification information of the target cell, the first terminal device performs data transmission in the first cell based on the user plane optimization mode; and/or if the satellite identification information of the first cell is different from the satellite identification information of the target cell, the first terminal device does not perform the data transmission in the first cell based on the user plane optimization mode.

In some implementations, the operation of the first terminal device not performing the data transmission in the first cell based on the user plane optimization mode includes that: the first terminal device performs the data transmission in the first cell based on the control plane optimization mode.

In some implementations, the target cell includes a cell that configures suspendConfig information for the first terminal device. Alternatively, the target cell is a cell that stores an access stratum context of the first terminal device.

In some implementations, the satellite identification information of the first cell is carried in system information of the first cell.

In some implementations, the first indication information is carried in a response message for a connection resume request message that is transmitted by the first terminal device.

In some implementations, the first indication information is transmitted in case that a first condition is not met. The first condition is one or more of the following: the network device stores an access stratum context of the first terminal device; and the network device is capable of acquiring an access stratum context of the first terminal device from another network device.

In some implementations, the first terminal device is a terminal device whose RRC connection is in a suspend state.

In some implementations, the first information further includes third cell barred information. The third cell barred information is used to indicate whether the first cell allows access by a third type of terminal device. The third type of terminal device does not have the NTN capability.

In some implementations, the first terminal device is an NB-IoT terminal or an eMTC terminal.

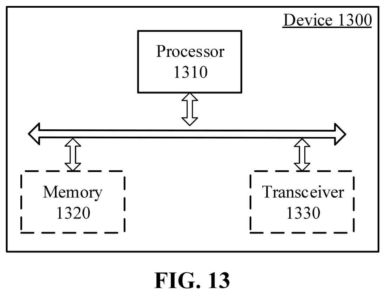

In an optional embodiment, the receiving unit 1110 may be a transceiver 1330. The terminal device 1100 may further include a processor 1310 and a memory 1320, as specifically illustrated in FIG. 13.

In an optional embodiment, the transmission unit 1210 may be a transceiver 1330. The network device 1200 may further include a processor 1310 and a memory 1320, as specifically illustrated in FIG. 13.

FIG. 13 is a schematic structural diagram of a communication device according to an embodiment of the present disclosure. The dotted line in FIG. 13 indicates that the units or modules are optional. The device 1300 may be used to implement any of the methods described in the above method embodiments. The device 1300 may be a chip, a terminal device, or a network device.

The device 1300 may include one or more processors 1310. The processor 1310 is configured to enable the device 1300 to implement any of the methods described in the above method embodiments. The processor 1310 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field programmable gate array (FPGA) or another programmable logic device, a discrete gate or transistor logic device, or a discrete hardware component. The general-purpose processor may be a microprocessor, or may be any conventional processor or the like.

The device 1300 may further include one or more memories 1320. The memory 1320 has stored thereon a program that may be executed by the processor 1310 to cause the processor 1310 to perform any of the methods described in the above method embodiments. The memory 1320 may be independent of the processor 1310, or may be integrated in the processor 1310.

The device 1300 may further include a transceiver 1330. The processor 1310 may communicate with other devices or chips through the transceiver 1330. For example, the processor 1310 may transmit data to or receive data from other devices or chips through the transceiver 1330.

In the embodiments of the present disclosure, a computer-readable storage medium for storing a program is further provided. The computer-readable storage medium may be applied to the terminal or the network device according to an embodiment of the present disclosure, and the program causes a computer to perform each of the methods performed by the terminal or the network device in each of the embodiments of the present disclosure.

In the embodiments of the present disclosure, a computer program product is further provided. The computer program product includes a program. The computer program product may be applied to the terminal or the network device according to an embodiment of the present disclosure, and the program causes a computer to perform each of the methods performed by the terminal or the network device in each of the embodiments of the present disclosure.

In the embodiments of the present disclosure, a computer program is further provided. The computer program may be applied to the terminal or the network device according to an embodiment of the present disclosure, and the computer program causes a computer to perform each of the methods performed by the terminal or the network device in each of the embodiments of the present disclosure.

It should be understood that the terms "system" and "network" may be used interchangeably in the present disclosure. In addition, the terms used in the present disclosure are only for the purpose of explanation of specific embodiments in the present disclosure, and are not intended to limit the present disclosure. The terms "first", "second", "third" and "fourth" and the like in the description, the claims and the accompanying drawings of the present disclosure are used to distinguish different objects, but not used to describe a particular order. Furthermore, the terms "include" and "have" and any variations thereof are intended to cover non-exclusive inclusions.

In the embodiments of the present disclosure, the mentioned term "indicate/indication" may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B.

In the embodiments of the present disclosure, "B corresponding to A" represents that B is associated with A, and B may be determined based on A. However, it should also be understood that, "B is determined based on A" does not mean that B is determined merely based on A, but that B may also be determined based on A and/or other information.

In the embodiments of the present disclosure, the term "correspond/correspondence" may represent that there is a direct or indirect correspondence between the two objects; or, may represent that there is an association relationship between two objects; or, may be a relationship such as indicating and being indicated, configuring and being configured, etc.

In the embodiments of the present disclosure, "predefined" or "preconfigured" may be implemented by pre-storing corresponding codes, tables, or other means which may be used to indicate relevant information in a device (including, e.g., a terminal device and a network device), and the specific implementation thereof is not limited in the present disclosure. For example, "predefined" may be "defined in a protocol".

In the embodiments of the present disclosure, the "protocol" may refer to a standard protocol in the field of communications, and for example, it may include an LTE protocol, an NR protocol, and relevant protocols applied to future communication systems, which are not limited in the present disclosure.

In the embodiments of the present disclosure, the term "and/or" merely indicates an association relationship for describing associated objects, and represents that there are three kinds of relationships. For example, "A and/or B" may represent three situations, i.e., independent existence of A, existence of both A and B, and independent existence of B. In addition, the character "/" herein generally indicates that the anterior and posterior associated objects are in a kind of "or" relationship.

In various embodiments of the present disclosure, the values of the sequence numbers of the aforementioned processes do not imply the sequence of execution. The sequence of execution of the processes should be determined based on functions thereof and inherent logics, and the values of the sequence numbers should not constitute any limitation on the implementation processes of the embodiments of the present disclosure.

In several embodiments provided in the present disclosure, it should be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, they may be located in one place or may be distributed to multiple network units. Part or all of the units may be selected based on the actual needs to achieve the purpose of the solution of the embodiments.

In addition, various functional units in the embodiments of the present disclosure may be integrated into one processing unit, or they may be physically exist separately as individual units, or two or more units may be integrated into one unit.

The embodiments described above may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, processes or functions in the embodiments of the present disclosure are generated in whole or in part. The computer may be a general-purpose computer, a dedicated computer, a computer network, or other programmable devices. The computer instructions may be stored in a computer-readable storage medium, or may be transmitted from one computer-readable storage medium to another computer readable storage medium. For example, the computer instructions may be transmitted from one website, computer, server, or data center to another website, computer, server, or data center in a wired (e.g., coaxial cable, fiber optic, digital subscriber line (DSL)) or wireless (e.g., infrared, wireless, microwave, etc.) manner. The computer-readable storage medium may be any available medium accessible by a computer or a data storage device such as a server, a data center and the like integrated by one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above descriptions are only specific implementations of the present disclosure; however, the scope of protection of the present disclosure is not limited thereto. Variations or replacements which can be readily conceived by those skilled in the art within the technical scope disclosed by the present disclosure shall fall within the scope of protection of the present disclosure. Therefore, the scope of protection of the present disclosure shall be subject to the scope of protection of the claims.

## Claims

1. A method for wireless communication, comprising:
receiving, by a first terminal device, first information from a network device, wherein the first information comprises one or more of the following:
first cell barred information, used for indicating whether a first cell allows access by a first type of terminal device;
second cell barred information, used for indicating whether a first cell allows access by a second type of terminal device;
satellite identification information of a first cell; and
first indication information, used for indicating the first terminal device to switch from a user plane optimization mode to a control plane optimization mode;
wherein each of the first type of terminal device and the second type of terminal device has non-terrestrial network (NTN) capability, and the NTN capability of the first type of terminal device is not completely identical to the NTN capability of the second type of terminal device.

2. The method of claim 1, wherein the first type of terminal device supports a satellite to operate in a store-and-forward mode; and/or the second type of terminal device does not support a satellite to operate in a store-and-forward mode.

3. The method of claim 1 or 2, wherein the satellite identification information of the first cell is used by the first terminal device to determine one or more of the following:
whether to reside in the first cell; and
a data transmission mode in the first cell.

4. The method of claim 3, further comprising:
if the satellite identification information of the first cell is identical to satellite identification information of a target cell, residing, by the first terminal device, in the first cell; and/or
if the satellite identification information of the first cell is different from satellite identification information of a target cell, not residing, by the first terminal device, in the first cell.

5. The method of claim 3, further comprising:
if the satellite identification information of the first cell is identical to satellite identification information of a target cell, performing, by the first terminal device, data transmission in the first cell based on the user plane optimization mode; and/or
if the satellite identification information of the first cell is different from satellite identification information of a target cell, not performing, by the first terminal device, data transmission in the first cell based on the user plane optimization mode.

6. The method of claim 5, wherein not performing, by the first terminal device, the data transmission in the first cell based on the user plane optimization mode comprises: performing, by the first terminal device, the data transmission in the first cell based on the control plane optimization mode.

7. The method of any one of claims 4 to 6, wherein the target cell comprises a cell that configures suspendConfig information for the first terminal device; or the target cell is a cell that stores an access stratum context of the first terminal device.

8. The method of any one of claims 1 to 7, wherein the satellite identification information of the first cell is carried in system information of the first cell.

9. The method of claim 1 or 2, wherein the first indication information is carried in a response message for a connection resume request message that is transmitted by the first terminal device.

10. The method of any one of claims 1, 2 or 9, wherein the first indication information is transmitted in case that a first condition is not met, and the first condition comprises one or more of the following:
the network device stores an access stratum context of the first terminal device; and
the network device is capable of acquiring an access stratum context of the first terminal device from another network device.

11. The method of any one of claims 1 to 10, wherein the first terminal device is a terminal device whose radio resource control (RRC) connection is in a suspend state.

12. The method of any one of claims 1 to 8, wherein the first information further comprises:
third cell barred information, used for indicating whether the first cell allows access by a third type of terminal device, wherein the third type of terminal device does not have the NTN capability.

13. The method of any one of claims 1 to 12, wherein the first terminal device is a narrow band Internet of Things (NB-IoT) terminal or an enhanced machine type communication (eMTC) terminal.

14. A method for wireless communication, comprising:
transmitting, by a network device, first information, wherein the first information comprises one or more of the following:
first cell barred information, used for indicating whether a first cell allows access by a first type of terminal device;
second cell barred information, used for indicating whether a first cell allows access by a second type of terminal device;
satellite identification information of a first cell; and
first indication information, used for indicating a first terminal device to switch from a user plane optimization mode to a control plane optimization mode;
wherein each of the first type of terminal device and the second type of terminal device has non-terrestrial network (NTN) capability, and the NTN capability of the first type of terminal device is not completely identical to the NTN capability of the second type of terminal device.

15. The method of claim 14, wherein the first type of terminal device supports a satellite to operate in a store-and-forward mode; and/or the second type of terminal device does not support a satellite to operate in a store-and-forward mode.

16. The method of claim 14 or 15, wherein the satellite identification information of the first cell is used by the first terminal device to determine one or more of the following:
whether to reside in the first cell; and
a data transmission mode in the first cell.

17. The method of claim 16, wherein
if the satellite identification information of the first cell is identical to satellite identification information of a target cell, the first terminal device resides in the first cell; and/or
if the satellite identification information of the first cell is different from satellite identification information of a target cell, the first terminal device does not reside in the first cell.

18. The method of claim 16, wherein
if the satellite identification information of the first cell is identical to satellite identification information of a target cell, the first terminal device performs data transmission in the first cell based on the user plane optimization mode; and/or
if the satellite identification information of the first cell is different from satellite identification information of a target cell, the first terminal device does not perform data transmission in the first cell based on the user plane optimization mode.

19. The method of claim 18, wherein the first terminal device not performing the data transmission in the first cell based on the user plane optimization mode comprises that the first terminal device performs the data transmission in the first cell based on the control plane optimization mode.

20. The method of any one of claims 17 to 19, wherein the target cell comprises a cell that configures suspendConfig information for the first terminal device; or the target cell is a cell that stores an access stratum context of the first terminal device.

21. The method of any one of claims 14 to 20, wherein the satellite identification information of the first cell is carried in system information of the first cell.

22. The method of claim 14 or 15, wherein the first indication information is carried in a response message for a connection resume request message that is transmitted by the first terminal device.

23. The method of any one of claims 14, 15 or 22, wherein the first indication information is transmitted in case that a first condition is not met, and the first condition comprises one or more of the following:
the network device stores an access stratum context of the first terminal device; and
the network device is capable of acquiring an access stratum context of the first terminal device from another network device.

24. The method of any one of claims 14 to 23, wherein the first terminal device is a terminal device whose radio resource control (RRC) connection is in a suspend state.

25. The method of any one of claims 14 to 24, wherein the first information further comprises:
third cell barred information, used for indicating whether the first cell allows access by a third type of terminal device, wherein the third type of terminal device does not have the NTN capability.

26. The method of any one of claims 14 to 25, wherein the first terminal device is a narrow band Internet of Things (NB-IoT) terminal or an enhanced machine type communication (eMTC) terminal.

27. A terminal device, wherein the terminal device is a first terminal device, comprising:
a receiving unit, configured to receive first information from a network device, wherein the first information comprises one or more of the following:
first cell barred information, used for indicating whether a first cell allows access by a first type of terminal device;
second cell barred information, used for indicating whether a first cell allows access by a second type of terminal device;
satellite identification information of a first cell; and
first indication information, used for indicating the first terminal device to switch from a user plane optimization mode to a control plane optimization mode;
wherein each of the first type of terminal device and the second type of terminal device has non-terrestrial network (NTN) capability, and the NTN capability of the first type of terminal device is not completely identical to the NTN capability of the second type of terminal device.

28. The terminal device of claim 27, wherein the first type of terminal device supports a satellite to operate in a store-and-forward mode; and/or the second type of terminal device does not support a satellite to operate in a store-and-forward mode.

29. The terminal device of claim 27 or 28, wherein the satellite identification information of the first cell is used by the first terminal device to determine one or more of the following:
whether to reside in the first cell; and
a data transmission mode in the first cell.

30. The terminal device of claim 29, further comprising:
if the satellite identification information of the first cell is identical to satellite identification information of a target cell, the first terminal device resides in the first cell; and/or
if the satellite identification information of the first cell is different from satellite identification information of a target cell, the first terminal device does not reside in the first cell.

31. The terminal device of claim 29, further comprising:
if the satellite identification information of the first cell is identical to satellite identification information of a target cell, the first terminal device performs data transmission in the first cell based on the user plane optimization mode; and/or
if the satellite identification information of the first cell is different from satellite identification information of a target cell, the first terminal device does not perform data transmission in the first cell based on the user plane optimization mode.

32. The terminal device of claim 31, wherein the first terminal device not performing the data transmission in the first cell based on the user plane optimization mode comprises that: the first terminal device performs the data transmission in the first cell based on the control plane optimization mode.

33. The terminal device of any one of claims 30 to 32, wherein the target cell comprises a cell that configures suspendConfig information for the first terminal device; or the target cell is a cell that stores an access stratum context of the first terminal device.

34. The terminal device of any one of claims 27 to 33, wherein the satellite identification information of the first cell is carried in system information of the first cell.

35. The terminal device of claim 27 or 28, wherein the first indication information is carried in a response message for a connection resume request message that is transmitted by the first terminal device.

36. The terminal device of any one of claims 27, 28 or 35, wherein the first indication information is transmitted in case that a first condition is not met, and the first condition comprises one or more of the following:
the network device stores an access stratum context of the first terminal device; and
the network device is capable of acquiring an access stratum context of the first terminal device from another network device.

37. The terminal device of any one of claims 27 to 36, wherein the first terminal device is a terminal device whose radio resource control (RRC) connection is in a suspend state.

38. The terminal device of any one of claims 27 to 37, wherein the first information further comprises:
third cell barred information, used for indicating whether the first cell allows access by a third type of terminal device, wherein the third type of terminal device does not have the NTN capability.

39. The terminal device of any one of claims 27 to 38, wherein the first terminal device is a narrow band Internet of Things (NB-IoT) terminal or an enhanced machine type communication (eMTC) terminal.

40. A network device, comprising:
a transmission unit, configured to transmit first information, wherein the first information comprises one or more of the following:
first cell barred information, used for indicating whether a first cell allows access by a first type of terminal device;
second cell barred information, used for indicating whether a first cell allows access by a second type of terminal device;
satellite identification information of a first cell; and
first indication information, used for indicating a first terminal device to switch from a user plane optimization mode to a control plane optimization mode;
wherein each of the first type of terminal device and the second type of terminal device has non-terrestrial network (NTN) capability, and the NTN capability of the first type of terminal device is not completely identical to the NTN capability of the second type of terminal device.

41. The network device of claim 40, wherein the first type of terminal device supports a satellite to operate in a store-and-forward mode; and/or the second type of terminal device does not support a satellite to operate in a store-and-forward mode.

42. The network device of claim 40 or 41, wherein the satellite identification information of the first cell is used by the first terminal device to determine one or more of the following:
whether to reside in the first cell; and
a data transmission mode in the first cell.

43. The network device of claim 42, wherein
if the satellite identification information of the first cell is identical to satellite identification information of a target cell, the first terminal device resides in the first cell; and/or
if the satellite identification information of the first cell is different from satellite identification information of a target cell, the first terminal device does not reside in the first cell.

44. The network device of claim 42, wherein
if the satellite identification information of the first cell is identical to satellite identification information of a target cell, the first terminal device performs data transmission in the first cell based on the user plane optimization mode; and/or
if the satellite identification information of the first cell is different from satellite identification information of a target cell, the first terminal device does not perform data transmission in the first cell based on the user plane optimization mode.

45. The network device of claim 44, wherein the first terminal device not performing the data transmission in the first cell based on the user plane optimization mode comprises that the first terminal device performs the data transmission in the first cell based on the control plane optimization mode.

46. The network device of any one of claims 43 to 45, wherein the target cell comprises a cell that configures suspendConfig information for the first terminal device; or the target cell is a cell that stores an access stratum context of the first terminal device.

47. The network device of any one of claims 40 to 46, wherein the satellite identification information of the first cell is carried in system information of the first cell.

48. The network device of claim 40 or 41, wherein the first indication information is carried in a response message for a connection resume request message that is transmitted by the first terminal device.

49. The network device of any one of claims 40, 41 or 48, wherein the first indication information is transmitted in case that a first condition is not met, and the first condition comprises one or more of the following:
the network device stores an access stratum context of the first terminal device; and
the network device is capable of acquiring an access stratum context of the first terminal device from another network device.

50. The network device of any one of claims 40 to 49, wherein the first terminal device is a terminal device whose radio resource control (RRC) connection is in a suspend state.

51. The network device of any one of claims 40 to 50, wherein the first information further comprises:
third cell barred information, used for indicating whether the first cell allows access by a third type of terminal device, wherein the third type of terminal device does not have the NTN capability.

52. The network device of any one of claims 40 to 50, wherein the first terminal device is a narrow band Internet of Things (NB-IoT) terminal or an enhanced machine type communication (eMTC) terminal.

53. A terminal device, comprising a transceiver, a memory and a processor; wherein the memory is configured to store a program, and the processor is configured to call and run the program in the memory and control the transceiver to receive or transmit a signal, to cause the terminal device to perform the method of any one of claims 1 to 13.

54. A network device, comprising a transceiver, a memory and a processor; wherein the memory is configured to store a program, and the processor is configured to call and run the program in the memory and control the transceiver to receive or transmit a signal, to cause the network device to perform the method of any one of claims 14 to 26.

55. A device, comprising a processor, wherein the processor is configured to call and run a program from a memory, to cause the device to perform the method of any one of claims 1 to 26.

56. A chip, comprising a processor, wherein the processor is configured to call and run a program from a memory, to cause a device installed with the chip to perform the method of any one of claims 1 to 26.

57. A computer-readable storage medium having stored thereon a program that causes a computer to perform the method of any one of claims 1 to 26.

58. A computer program product, comprising a program that causes a computer to perform the method of any one of claims 1 to 26.

59. A computer program that causes a computer to perform the method of any one of claims 1 to 26.
